(19) Europäisches Patentamt
European Patent Office
Office européen des brevets

(11) Veröffentlichungsnummer: **0 098 940**
**B1**

(12) # EUROPÄISCHE PATENTSCHRIFT

(45) Veröffentlichungstag der Patentschrift: **21.03.90**

(51) Int. Cl. 5: **C 08 L 83/10,** C 08 K 9/06, C 09 D 183/04, C 09 D 5/02

(21) Anmeldenummer: **83104928.3**

(22) Anmeldetag: **19.05.83**

(54) **Verfahren zur Herstellung von wässrigen Organosiliciumverbindung enthaltenden Zusammensetzungen.**

(30) Priorität: **21.05.82 DE 3219220**

(43) Veröffentlichungstag der Anmeldung: **25.01.84 Patentblatt 84/04**

(45) Bekanntmachung des Hinweises auf die Patenterteilung: **21.03.90 Patentblatt 90/12**

(84) Benannte Vertragsstaaten: **FR GB**

(56) Entgegenhaltungen:
**DE-B-1 127 078**
**GB-A-1 404 356**
**GB-A-1 522 244**
**GB-A-2 092 608**

(73) Patentinhaber: **WACKER-CHEMIE GMBH**
**Prinzregentenstrasse 22**
**D-8000 München 22 (DE)**

(72) Erfinder: **Deubzer, Bernward, Dr.**
**Virchowstrasse 14**
**D-8263 Burghausen (DE)**
Erfinder: **Wilhelm, Hermann**
**Südtiroler Strasse 22**
**A-5280 Braunau (AT)**

**EP 0 098 940 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

## Beschreibung

Aus GB-A-1 522 244 (veröffentlicht 23. August 1978, Dow Corning Limited) sind bereits wäßrige Zusammensetzungen bekannt, die durch Vermischen von Wasser mit über Sauerstoff an Silicium gebundene aliphatische Reste aufweisender Organosiliciumverbindung, nämlich einer eng begrenzten Art von Monoorganotrialkoxysilanen, wie Methyltrimethoxysilan, und Hydroxyethylcellulose, also einem wasserlöslichen Celluloseether mit alkoholischen Hydroxylgruppen, unter Zusatz von Säure zur Einstellung eines sauren pH-Werts hergestellt werden. Diese bereits bekannten Zusammensetzungen sind Lösungen. Die erfindungsgemäßen Zusammensetzungen sind dagegen Emulsionen. Gegenüber den Zusammensetzungen gemäß GB-A-1 522 244 haben die erfindungsgemäßen Zusammensetzungen insbesondere die Vorteile, daß sie sowohl bei saurem als auch bei alkalischem oder neutralem pH-Wert erheblich länger beständig sind, hinsichtlich der Art der SiC-gebundenen organischen Reste weniger beschränkt sind und somit nicht nur SiC-gebundene Methyl-, Ethyl- oder Vinylreste, sondern auch z. B. Phenyl- oder Isooctylreste enthalten können und daß sie nicht nur Monoorganosiloxaneinheiten, sondern auch Diorganosiloxan- und Triorganosiloxaneinheiten enthalten und damit auch elastischere und biegsamere Überzüge ergeben können.

Gegenstand der Erfindung ist ein Verfahren zur Herstellung von wäßrigen, Organosiliciumverbindung enthaltenden Zusammensetzungen durch Vermischen von Wasser mit über Sauerstoff an Silicium gebundene aliphatische Reste aufweisender Organosiliciumverbindung und Polyvinylalkohol oder wasserlöslichem Celluloseether mit alkoholischen Hydroxylgruppen oder Polyvinylalkohol und wasserlöslichem Celluloseether mit alkoholischen Hydroxylgruppen unter Zusatz von Säure zur Einstellung eines sauren pH-Werts, dadurch gekennzeichnet, daß als über Sauerstoff an Silicium gebundene aliphatische Reste aufweisende Organosiliciumverbindung Organosiloxan mit über Sauerstoff an Silicium gebundenen aliphatischen Resten, das vor dem Vermischen mit Polyvinylalkohol oder Celluloseether hergestellt wurde, verwendet worden ist.

Als Polyvinylalkohole können bei der Bereitung der Zusammensetzungen beliebige Polyvinylalkohole eingesetzt werden. Polyvinylalkohole sind im Handel erhältlich. Bei den im Handel erhältlichen Polyvinylalkoholen handelt es sich insbesondere um teilverseifte Polyvinylacetate mit einem Hydrolysierungsgrad von 79 bis 99,5 Molprozent, deren 4-gewichtsprozentige wäßrige Lösung bei 20°C eine Viskosität von 2 bis 50 mPa.s aufweist. Die hier in der Beschreibung angegebenen Viskositäten von Polyvinylalkoholen beziehen sich jeweils auf Messungen in einem Kugelfall-Viskosimeter nach Höppler.

Es können Mischungen aus verschiedenen Arten von Polyvinylalkoholen bei der erfindungsgemäßen der Zusammensetzungen eingesetzt werden. Es kann aber auch nur eine Art von Polyvinylalkohol bei der Bereitung von erfindungsgemäßen Zusammensetzungen verwendet werden.

Als wasserlösliche Celluloseether mit alkoholischen Hydroxylgruppen können bei der Bereitung ebenfalls beliebige handelsübliche, wasserlösliche Celluloseether mit alkoholischen Hydroxylgruppen eingesetzt werden. Bevorzugt sind Methylcellulosen mit einem durchschnittlichen Methoxylgehalt von etwa 25 bis 30 Gewichtsprozent und durchschnittlich 200 bis 1 000 Glukoseeinheiten je Molekül, Methylhydroxyethylcellulosen mit einem durchschnittlichen Methoxylgehalt von etwa 25 bis 30 Gewichtsprozent und durchschnittlich 200 bis 1 000 Glukoseeinheiten je Molekül und Natrium-Carboxymethylcellulosen mit einem Gehalt an gebundenem Natrium von 7,5 bis 9 Gewichtsprozent und durchschnittlich 150 bis 1 000 Glukoseeinheiten je Molekül.

Selbstverständlich können auch Mischungen aus verschiedenen Arten von Celluloseethern bei der erfindungsgemäßen Bereitung der Zusammensetzungen verwendet werden. Es kann aber auch nur eine Art von Celluloseether bei der Bereitung der erfindungsgemäßen Zusammensetzungen verwendet werden.

Polyvinylalkohol oder Celluloseether oder Polyvinylalkohol und Celluloseether wird vorzugsweise in Mengen von insgesamt 1 bis 15 Gewichtsprozent, insbesondere 3 bis 10 Gewichtsprozent, jeweils bezogen auf das Gewicht der jeweils eingesetzten Menge an Organosiloxan mit über Sauerstoff an Silicium gebundenen aliphatischen Resten, bei der erfindungsgemäßen Bereitung der Zusammensetzungen eingesetzt.

Wasser wird vorzugsweise in Mengen von 40 bis 70 Gewichtsprozent, bezogen auf das Gesamtgewicht der jeweils eingesetzten Menge an Wasser und Organosiloxan mit über Sauerstoff an Silicium gebundenen aliphatischen Resten, bei der Bereitung der Zusammensetzungen eingesetzt.

Damit es sich bei den zur erfindungsgemäßen Herstellung der Zusammensetzungen eingesetzten Organosiliciumverbindungen um Organosiloxane handelt, müssen diese Organosiliciumverbindungen natürlich mindestens 2 Siliciumatome und mindestens ein Siloxansauerstoffatom, also ein Sauerstoffatom in der Gruppierung

$$\equiv SiOSi \equiv$$

enthalten.

Vorzugsweise haben die bei der erfindungsgemäßen Bereitung der Zusammensetzungen eingesetzten Organosiloxane mit über Sauerstoff an Silicium gebundenen aliphatischen Resten eine Viskosität von 10 bis 1 000 $mm^2.s^{-1}$ bei 25°C.

Vorzugsweise enthalten die bei der Bereitung der oben genannten Zusammensetzungen eingesetzten Organosiloxane mit über Sauerstoff an Silicium gebundenen aliphatischen Resten 10 bis 40 Molprozent an über Sauerstoff an Silicium gebundenen aliphatischen Resten und diese Reste

1 bis 4 Kohlenstoffatome je Rest.

Vorzugsweise enthalten die bei der Bereitung der Zusammensetzungen eingesetzten Organosiloxane mit über Sauerstoff an Silicium gebundenen aliphatischen Resten mindestens 20 Molprozent Monoorganosiloxaneinheiten, was bedeutet, daß sie auch zu 100 Molprozent aus Monoorganosiloxaneinheiten bestehen können. Die gegebenenfalls vorhandenen anderen Siloxaneinheiten in den bei der erfindungsgemäßen Bereitung der Zusammensetzungen eingesetzten Organosiloxane gehören vorzugsweise zu mindestens einer Art von Einheiten, die aus der Gruppe der Diorganosiloxaneinheiten, Triorganosiloxaneinheiten und Einheiten der Formel $SiO_{4/2}$ bzw. $Si(OR')_aO_{4-a}/2$,

wobei
a 1, 2 oder 3 ist und
OR' gleiche oder verschiedene an Silicium über Sauerstoff gebundene aliphatische Reste bedeutet,
ausgewählt ist.

Die Monoorganosiloxaneinheiten in den bei der erfindungsgemäßen Bereitung der Zusammensetzungen eingesetzten Organosiloxanen mit über Sauerstoff an Silicium gebundenen aliphatischen Resten können durch die allgemeine Formel

$R\,Si(OR')_bO_{3-b/2}$,

wobei

R gleiche oder verschiedene SiC-gebundene, einwertige organische Reste bedeutet,
b 0, 1 oder 2 ist und
OR' die oben dafür angegebene Bedeutung hat,
wiedergegeben werden.

Die Diorganosiloxaneinheiten in den bei der Bereitung der Zusammensetzungen eingesetzten Organosiloxanen mit über Sauerstoff an Silicium gebundenen aliphatischen Resten können durch die allgemeine Formel

$R_2Si(OR')_cO_{2-c/2}$,

wiedergegeben werden, wobei
R und OR' jeweils die oben dafür angegebene Bedeutung haben und
c 0 oder 1 ist

Triorganosiloxaneinheiten können durch die allgemeine Formel

$R_3SiO_{1/2}$,

wobei R die oben dafür angegebene Bedeutung hat, wiedergegeben werden.

Vorzugsweise beträgt der Anteil der Triorganosiloxaneinheiten und der von SiC-gebundenen organischen Resten freien Siloxaneinheiten jeweils höchstens 5 Molprozent.

Beispiele für einwertige organische Reste R sind geradkettige oder verzweigte Alkylreste, wie der Methyl-, Ethyl-, n-Propyl-, Isopropyl-, n-Butyl- und sec.-Butylrest sowie Octyl-, Dodecyl- und Octadecylreste; Cycloalkylreste, wie der Cyclopentyl- und Cyclohexylrest; geradkettige oder verzweigte Alkenylreste, wie der Vinyl-, Allyl- und Methallylrest; Arylreste, wie der Phenylrest, Alkarylreste, wie Tolylreste; Aralkylreste, wie der Benzylrest sowie substituierte Kohlenwasserstoffreste, z. B. halogenierte Kohlen-wasserstoffreste, wie der 3,3,3-Trifluorpropylrest sowie Chlorphenyl- und Dichlorphenylreste.

Beispiele für die aliphatischen Reste R' sind der Methyl-, Ethyl-, n-Propyl-, Isopropyl-, n-Butyl-, sec.-Butyl-, und Methoxyethylenrest, wobei der Methyl- und der Ethylrest bevorzugt sind.

Es können Mischungen aus verschiedenen Arten von Organosiloxanen mit über Sauerstoff an Silicium gebundenen aliphatischen Resten bei der Bereitung der erfindungsgemäßen Zusammensetzungen eingesetzt werden. Es kann aber auch nur eine Art von Organosiloxan mit über Sauerstoff an Silicium gebundenen aliphatischen Resten bei der Bereitung von erfindungsgemäßen Zusammensetzungen eingesetzt werden.

Zusätzlich zu Organosiloxanen mit über Sauerstoff an Silicium gebundenen aliphatischen Resten können bei der erfindungsgemäßen Bereitung der Zusammensetzungen weitere organische Siliciumverbindungen mitverwendet werden. Beispiele für solche weiteren organischen Siliciumverbindungen sind verzweigte oder lineare Organosiloxane mit Si-gebundenen Hydroxylgruppen, cyclische Organopolysiloxane mit oder ohne Si-gebundene(n) Hydroxylgruppen und Polyethylsilikate.

Vorzugsweise wird bei der erfindungsgemäßen Bereitung der Zusammensetzungen als saurer pH-Wert ein pH-Wert von 1 bis 5, insbesondere ein pH-Wert von 1 bis 3, eingestellt. Zur Einstellung des pH-Wertes können beliebige Säuren, einschließlich Gemischen von Säuren verwendet werden, die geeignet sind, den pH-Wert auf den gewünschten Wert einzustellen. Bevorzugt sind Sulfonsäuren und Mineralsäuren, wie Salzsäure oder Schwefelsäure. Der gewünschte pH-Wert kann aber selbstverständlich auch mit z. B. Essigsäure eingestellt werden.

Die erfindungsgemäße Bereitung der Zusammensetzungen kann durch Vermischen der dabei verwendeten Siliciumverbindungen, Säuren, Polyvinylalkohol oder Celluloseether bzw. Polyvinylalkohol und Celluloseether und Wasser in beliebiger Reihenfolge durchgeführt werden. Dabei kann z. B. Organosiloxan mit über Sauerstoff an Silicium gebundenen aliphatischen Resten mit Polyvinylalkohol oder Celluloseether bzw. Polyvinylalkohol und Celluloseether, Säure und nur einem Teil der insgesamt verwendeten Menge an Wasser vermischt werden und der Rest des Wassers während dieses Vermischens oder nach diesem Vermischen zugegeben werden. Es kann aber auch z. B. Organosiloxan mit über Sauerstoff an Silicium gebundenen aliphatischen

Resten in eine saure Lösung von Polyvinylalkohol oder Celluloseether bzw. Polyvinylalkohol und Celluloseether in Wasser eingemischt werden.

Vorzugsweise wird die erfindungsgemäße Bereitung der Zusammensetzungen in Mischgeräten, die zur Herstellung von Emulsionen geeignet sind, durchgeführt. Beispiele für solche Mischgeräte sind schnellaufende Stator-Rotor-Rührgeräte und Rührscheibengeräte. Es können aber auch einfache Flügelrührer verwendet werden.

Vorzugsweise werden die zur erfindungsgemäßen Herstellung der Zusammensetzungen eingesetzten Stoffe bei Raumtemperatur und beim Druck der umgebenden Atmosphäre vermischt. Falls erwüscht können aber auch niedrigere oder höhere Temperaturen angewendet werden. Ebenso können auch höhere oder niedrigere Drücke bei der Herstellung der erfindungsgemäßen Zusammensetzungen angewendet werden.

Das Mischen bei der erfindungsgemäßen Bereitung der Zusammensetzungen kann beendet werden, wenn ein Tropfen der Mischung, der z. B. auf eine Glasplatte aufgebracht wurde, zu einem geschlossenem Film auftrocknet. Das ist bei einem pH-Wert von 2 nach 30 bis 60 Minuten der Fall.

Bei der erfindungsgemäßen Bereitung der Zusammensetzungen findet eine Umsetzung von über Sauerstoff an Silicium gebundenen aliphatischen Resten mit dem Wasser und möglicherweise auch mit den Hydroxylgruppen des Polyvinylalkohols oder des Celluloseethers oder des Polyvinylalkohol und Celluloseethers sowie eine Molekulargewichtsvergrößerung des bei dieser Bereitung eingesetzten Organosiloxans statt.

Wenn ein Tropfen der Mischung zu einem geschlossenen Film auftrocknet, kann die Mischung neutralisiert, also auf einen pH-Wert von etwa 7 eingestellt werden. Zu diesem Neutralisieren können Basen, wie Ammoniak, Amine, Aminoalkohole, z. B. Ethanolamin, Calciumoxyd, Magnesiumoxyd oder andere säurebindende Stoffe, wie Calciumcarbonat, verwendet werden. Vorzugsweise erfolgt ein derartiges Neutralisieren.

Die erfindungsgemäß herstellbaren Zusammensetzungen sind vorzugsweise und vorteilhafterweise frei von organischem Lösungsmittel, abgesehen von bei der Hydrolyse der über Sauerstoff an Silicium gebundenen aliphatischen Reste frei gewordenem Alkohol. Sie können beispielsweise als Bindemittel für wäßrige Anstriche auf z. B. Holz, Mauerwerk, Metallen, Kunststoffen oder Glas verwendet werden, wobei diese wäßrigen Anstrichmittel beliebige Pigmente, einschließlich Aluminiumpigmenten, enthalten können. Weiterhin können die erfindungsgemäßen Zusammensetzungen beispielsweise als Grundiermittel zum Verbinden von Organopolysiloxanelastomeren mit beliebigen Unterlagen, als Zusätze zu organischen Dispersionen und als Hydrophobiermittel in phenolharzgebundenen Mineralisolierstoffen eingesetzt werden.

In den folgenden Beispielen beziehen sich alle Angaben von Teilen und Prozentsätzen auf das Gewicht, soweit nichts anderes angegeben ist.

**Beispiel 1**

250 Teile eines Teilhydrolysats von Methyltriethoxysilan mit 40 Molprozent Ethoxygruppen und einer Viskosität von 25 $mm^2/.s^{-1}$ bei 25°C werden mit 125 Teilen einer 10-%-igen wäßrigen Lösung von Polyvinylalkohol mit einem Hydrolysierungsgrad von 86,0 bis 89,0 Molprozent, wobei die unhydrolysierten Gruppen Acetylgruppen sind, dessen 4-gewichtsprozentige wäßrige Lösung bei 20°C eine Viskosität von 25 ± 4 mPa.s aufweist, also mit 5 % Polyvinylalkohol, bezogen auf das Gewicht von Methylsiloxan mit über Sauerstoff an Silicium gebundenen Ethylresten, versetzt. Die so erhaltene ungleichmäßige Mischung wird in einem Stator-Rotor-Rührgerät (bekannt unter dem registrierten Warenzeichen "Ultra-Turrax") in eine gleichmäßige Mischung übergeführt und dabei innerhalb von 5 Minuten mit 150 Teilen Wasser versetzt. Dann wird mit 48-%-iger Schwefelsäure ein pH-Wert von 2 eingestellt, weitere 30 Minuten in dem Stator-Rotor-Rührgerät gerührt und schließlich mit 25-%-igem wäßrigem Ammoniak auf einen pH-Wert von etwa 7 eingestellt.

**Beispiel 2**

Die in Beispiel 1 beschriebene Arbeitsweise wird wiederholt mit der Abänderung, daß anstelle eines Teilhydrolysats von Methyltriethoxysilan die gleiche Menge eines Teilhydrolysats von Isooctyltrimethoxysilan mit 25 Molprozent Methoxygruppen und einer Viskosität von 20 $mm^2.s^{-1}$ bei 25°C verwendet wird.

**Beispiel 3**

Die in Beispiel 1 beschriebene Arbeitsweise wird wiederholt mit der Abänderung, daß anstelle eines Teilhydrolysats von Methyltriethoxysilan die gleiche Menge eines Mischpolymerisats aus $C_6H_5SiO_{3/2}$- und $(CH_3)_2$ SiO-Einheiten im Molverhältnis von 2 : 1 mit 12 Molprozent Methoxy- und 6 Molprozent n-Butoxygruppen und einer Viskosität von 125 $mm^2.s^{-1}$ bei 25°C verwendet wird.

**Beispiel 4**

Die in Beispiel 1 beschriebene Arbeitsweise wird wiederholt mit der Abänderung, daß anstelle eines Teilhydrolysats von Methyltriethoxysilan die gleiche Menge eines Mischpolymerisats aus $C_6H_5SiO_{3/2}$- und $CH_3SiO_{3/2}$-Einheiten im Molverhältnis von 1 : 1 mit 35 Molprozent Methoxygruppen und einer Viskosität von 15 $mm^2/.s^{-1}$ verwendet wird.

**Beispiel 5**

Die in Beispiel 1 beschriebene Arbeitsweise wird wiederholt mit der Abänderung, daß anstelle eines Teilhydrolysats von Methyltriethoxysilan als einziger Organosiliciumverbindung die gleiche Menge aus gleichen Gewichtsteilen des Teilhydrolysats von Methyltriethoxysilan der in Beispiel 1 näher beschriebenen Art und eines in den endständigen Einheiten je eine Si-gebundene Hydroxylgruppe aufweis enden Dimethylpolysiloxans mit einer Viskosität von 120 $mm^2.s^{-1}$ bei 25°C verwendet wird.

Alle gemäß den Beispielen 1 bis 5 hergestellten Zusammensetzungen besitzen ausgezeichnete Lagerbeständigkeit und trocknen zu geschlossenen Filmen mit hoher mechanischer Festigkeit auf.

**Beispiel 6**

In eine Lösung von 30 Teilen einer Methylhydroxyethylcellulose mit einem mittleren Methoxylgehalt von etwa 25 % und durchschnittlich 600 Glukoseeinheiten je Molekül in 1 500 Teilen Wasser werden 1 470 Teile des in Beispiel 1 näher beschriebenen Teilhydrolysats von Methyltriethoxysilan gegeben. Die Mischung wird mit einem einfachen Flügelrührer gerührt und mit 3,4 Teilen 48-%-iger Schwefelsäure versetzt. Nach 4 Stunden weiteren Rührens wird mit 25-%-igem wäßrigem Ammoniak auf einen pH-Wert von etwa 7 eingestellt.

Eine Probe der so hergestellten Emulsion wird eine Stunde bei 4 000 Umdrehungen je Minute zentrifugiert. Dabei wird keinerlei Auftrennung von wäßriger Phase und Organopolysiloxanphase beobachtet.

Nach 4 Wochen Lagerung der Emulsion bei Raumtemperatur ist keine Veränderung der Emulsion festzustellen.

**Vergleichsversuch a)**

Die in Beispiel 6 beschriebene Arbeitsweise wird wiederholt mit der Abänderung, daß 1 470 Teile Methyltriethoxysilan anstelle des Teilhydrolysats von Methyltriethoxysilan verwendet werden.

Es bildet sich zunächst eine fast klare Lösung, die innerhalb einiger Stunden milchig weiß wird. Nach 48 Stunden Lagerung der Mischung bei Raumtemperatur ist die Mischung in den Gelzustand übergegangen.

**Vergleichsversuch b)**

Die in Beispiel 1 beschriebene Arbeitsweise wird wiederholt mit der Abänderung, daß anstelle der 10-%-igen wäßrigen Lösung von Polyvinylalkohol die gleiche Menge einer 10-%-igen wäßrigen Lösung von Natriumlaurylsulfat, also eines anionaktiven niedermolekularen Emulgators, verwendet wird.

**Vergleichsversuch c)**

Die in Beispiel 1 beschriebene Arbeitsweise wird wiederholt mit der Abänderung, daß anstelle der 10-%-igen wäßrigen Lösung von Polyvinylalkohol die gleiche Menge einer 10-%-igen wäßrigen Lösung eines Alkylphenolpolyethylen-glykolethers, also eines nichtionogenen niedermolekularen Emulgators, verwendet wird.

**Vergleichsversuch d)**

Die in Beispiel 1 beschriebene Arbeitsweise wird wiederholt mit der Abänderung, daß anstelle der 10-%-igen wäßrigen Lösung von Polyvinylalkohol die gleiche Menge einer 10-%-igen wäßrigen Lösung Cocosalkyldimethylbenzylammoniumchlorid, also eines kationaktiven niedermolekularen Emulgators, verwendet wird.

Keine der gemäß den Vergleichsversuchen b) bis d) hergestellten Zusammensetzungen trocknet zu einem geschlossenen Film auf.

**Patentansprüche**

1. Verfahren zur Herstellung von wäßrigen, Organosiliciumverbindung enthaltenden Zusammensetzungen durch Vermischen von Wasser mit über Sauerstoff an Silicium gebundene aliphatische Reste aufweisender Organosiliciumverbindung und Polyvinylalkohol oder wasserlöslichem Celluloseether mit alkoholischen Hydroxylgruppen oder Polyvinylalkohol und wasserlöslichem Celluloseether mit alkoholischen Hydroxylgruppen unter Zusatz von Säure zur Einstellung eines sauren pH-Werts, *dadurch gekennzeichnet*, daß als über Sauerstoff am Silicium gebundene aliphatische Reste aufweisende Organosiliciumverbindung ein Organosiloxan mit über Sauerstoff an Silicium gebundenen aliphatischen Resten, das vor dem Vermischen mit Polyvinylalkohol oder Celluloseether hergestellt wurde, verwendet wird.

2. Verfahren nach Anspruch 1, wobei als Organosiloxan mit über Sauerstoff an Silicium gebundene aliphatischen Resten solches aus mindestens 20 Molprozent Monoorganosiloxaneinheiten verwendet wird.

3. Verfahren nach Anspruch 1 oder 2, wobei nach dem Vermischen von Wasser mit Polyvinylalkohol oder Celluloseether oder Polyvinylalkohol und Celluloseether und Organosiloxan mit über Sauerstoff an Silicium gebundenen aliphatischen Resten neutralisiert werden.

**Claims**

1. Process for the production of aqueous compositions containing an organosilicon compound

by mixing water with an organosilicon compound having aliphatic radicals bonded via oxygen to silicon, and a polyvinyl alcohol or water-soluble cellulose ether having alcoholic hydroxyl groups or a polyvinyl alcohol and water-soluble cellulose ether having alcoholic hydroxyl groups with the addition of acid in order to adjust to an acid pH value, characterized in that, as the organosilicon compound having aliphatic radicals bonded via oxygen to silicon, an organosiloxane having aliphatic radicals bonded via oxygen to silicon is used, which was produced before the mixing with polyvinyl alcohol or cellulose ether.

2. Process according to Claim 1, in which as an organosiloxane having aliphatic radicals bonded via oxygen to silicon, one of the type comprising at least 20 mol per cent of monoorganosiloxane units is used.

3. Process according to Claim 1 or 2, in which after the mixing of water with polyvinyl alcohol or cellulose ether or polyvinyl alcohol and cellulose ether and organosiloxane having aliphatic radicals bonded via oxygen to silicon, they are neutralized.

**Revendications**

1. Procédé pour préparer des compositions aqueuses contenant un composé d'organo-silicium, par mélangeage de l'eau avec un composé d'organo-silicium présentant des restes aliphatiques liés à du silicium par l'intermédiaire de l'oxygène et du poly(alcool vinylique) ou de l'éther hydrosoluble de cellulose comportant des groupes hydroxyles alcooliques ou bien du poly(alcool vinylique) et de l'éther hydrosoluble de cellulose contenant des groupes hydroxyles alcooliques, avec addition d'acide pour ajuster le pH à une valeur acide, procédé caractérisé en ce que, à titre de composé d'organo-silicium présentant des restes organiques liés à du silicium par l'intermédiaire de l'oxygène, on utilise un organosiloxane comportant des restes aliphatiques liés à du silicium par l'intermédiaire de l'oxygène et qui a été préparé avant le mélangeage avec du poly(alcool vinylique) ou de l'éther de cellulose.

2. Procédé selon la revendication 1, dans lequel, on utilise comme organo-siloxane comportant des restes aliphatiques liés à du silicium par l'intermédiaire de l'oxygène un organo-siloxane formé d'au moins 20 moles à de motifs monoorgano-siloxanes.

3. Procédé selon la revendication 1 ou 2, dans lequel, après le mélangeage de l'eau avec du poly(alcool vinylique) ou de l'éther de cellulose ou bien du poly(alcool vinylique) et de l'éther de cellulose ainsi que de l'organosiloxane comportant des restes aliphatiques liés à du silicium par l'intermédiaire de l'oxygène, on effectue une neutralisation.